# EUROPEAN PATENT APPLICATION

(11) **EP 2 682 211 A1**
(43) Date of publication of application: **08.01.2014**
(21) Application number: 12751927.0
(22) Date of filing: 07.02.2012
(51) Int. Cl.: B23B 51/00

(54) **GUIDE PAD, CUTTING TOOL BODY, AND CUTTING TOOL**

(30) Priority: 28.02.2011 JP 2011041870
(71) Applicant: Tungaloy Corporation, Iwaki-shi Fukushima 970-1144 (JP)
(72) Inventor: NISIKAWA Koji, Iwaki-shi Fukushima 970-1144 (JP)
(74) Representative: Vossius & Partner
(86) International application number: PCT/JP2012/052762
(87) International publication number: WO 2012/117817

(57) **Abstract**

A guide pad with a high freedom degree of arrangement is provided. A plate-shaped guide pad (1) includes opposite top and bottom surfaces (2,3), and a side surface (4) that extends between the top surface (2) and the bottom surface (3), and is removably attached to a tool body (10) of a cutting tool. The side surface (4) has at least one guide surface (4a).

## Description

### Technical Field

The present invention relates to a guide pad removably attached to a cutting tool for supporting the cutting tool, a cutting tool body to which the guide pad is attached, and the cutting tool having the guide pad attached thereto.

### Background Art

As the conventional guide pad, the applicant has disclosed in Patent Literature 1. The guide pad is formed into a substantially rectangular plate shape, has a mounting hole, is attached to a drill, and is guided along an inner wall surface of a machining hole machined with the drill. Two curved surfaces each having a substantially arc-like cross-section and constituting guide surfaces are not formed on a side surface, but on an top surface in a substantially rectangular contour shape of the guide pad. The conventional guide pad is disclosed in Patent Literature 2. That is, it contains a cemented carbide member in a substantially rectangular plate shape, has a mounting hole, and has an extending wing-shaped protrusion around the mounting hole. The guide surface is not limited to the one with the substantially arc-like cross-section, but may be formed in a planar shape. In the guide pad disclosed in Patent Literature 2, too, the guide surface is formed not on the side surface, but on the top surface with the substantially rectangular contour shape.

### Citation List

### Patent Literature

PTL 1: Japanese Patent Laid-Open No. 2004-314258
PTL 2: Pamphlet of International Application Publication No. 96/008332

### Summary of Invention

### Technical Problem

For example, in a cutting tool with a single cutting edge for drilling a hole, generally, it is preferable to provide a guide pad at two positions: a 180° position around an axis of rotation with respect to the cutting edge; and a 90° position backward in a relative rotating direction of the tool with respect to the cutting edge, when seen from the leading end of the tool. In other words, it is preferable to provide it at the farthest position from the cutting edge, and at the position that receives a principal component of cutting force as the largest among three components of cutting force. However, when the tool diameter that defines the machining hole diameter is relatively smell, it is sometimes difficult to provide the guide pad at such preferable positions.

For a two-cutting-edge solid drill having two cutting edges, it is preferable to arrange guides (margin) each at a 90° position around an axis of rotation from the respective cutting edges. This is because at a 180° position around an axis of rotation with respect to one cutting edge, the other cutting edge surely exists. Likewise, it is preferable to provide the guide pads for an indexable drill having two or more cutting edges at substantially equidistant positions from a plurality of cutting edges of the drill. However, there are a large number of parts around a leading end of the indexable drill having two or more cutting edges, and accordingly, it is sometimes difficult to arrange the plurality of guide pads at desired positions.

A main reason thereof is interference of a cutting insert or a fastening mechanical part for the cutting insert with the guide pad. Therefore, it is preferable to use the guide pad having no interference, specifically having interference as small as possible, with the other components. However, the wall around the mounting hole is required to have sufficient strength for fastening of the guide pad with a clamp screw and the like. As the guide pad disclosed in in Patent Literature 1 is fastened with the clamp screw, the guide pad is configured to have the width larger than that of the head of the clamp screw. Accordingly, there is a limit to make the guide pad small or reduce its width. The guide pad disclosed in Patent Literature 2 is entirely formed of a cemented carbide, which is suitable for reducing the size and the width. However, the wing-shape protrusions left-right symmetrically protruding from two long sides of the guide pad are likely to be interfered with the other parts.

The present invention provides a guide pad that improves freedom degree of arrangement, a cutting tool body to which the guide pad is attached, and a cutting tool having the guide pad attached thereto.

### Solution to Problem

The guide pad according to the present invention is a guide pad (1) formed in a plate-like shape, including:
opposite top and bottom surface surfaces (2,3); and
a side surface (4) extending between the top surface (2) and the bottom surface (3), the guide pad being removably attached to a tool body (10) of a cutting tool. The side surface (4) comprises at least one guide surface (4a).

The cutting tool according to the present invention includes the above-described guide pad (1) and a tool body (10) to which the guide pad (1) is attached.

The cutting tool body (10) according to the present invention includes a pad seat that allows reception of the above-described guide pad (1).

### Advantageous Effects of Invention

The guide pad according to the present invention has a guide surface formed on a side surface that extends between the top and bottom surfaces. That is, the guide surface is formed on the side surface instead of the top surface of the guide pad formed into a plate shape so as to improve the freedom degree of arrangement of the guide pad.

### Brief Description of Drawings

Fig. 1 is a perspective view of a guide pad according to a first embodiment;
Fig. 2 is a plan view of the guide pad shown in Fig. 1;
Fig. 3 is a front view of the guide pad shown in Fig. 2;
Fig. 4 is a right side view of the guide pad shown in Fig 2;
Fig. 5 is a perspective view of a rotary cutting tool with the guide pad shown in Fig. 1 attached thereto according to an embodiment;
Fig. 6 is a perspective view of the cutting tool shown in Fig. 5 when seen from another direction;
Fig. 7 is a front view of the rotary cutting tool shown in Fig. 5; and
Fig. 8 is a perspective view of a guide pad according to a second embodiment.

### Description of Embodiments

Embodiments according to the present invention will be described referring to the drawings.

### First Embodiment

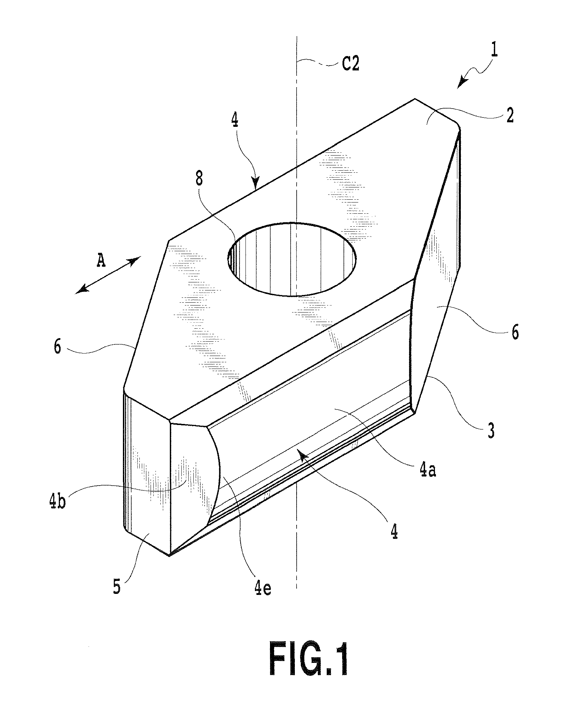

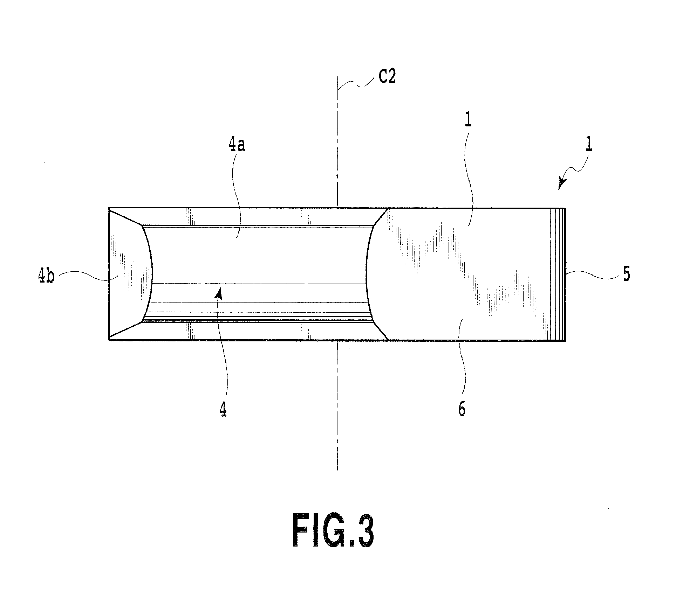

Referring to Figs. 1 to 4, a guide pad 1 according to the embodiment includes opposite top and bottom surfaces 2 and 3 , and a plurality of side surfaces 4, 5 and 6 which extends between the top surface 2 and the bottom surface 3, and is formed into a plate shape. Each contour shape of the top surface 2 and the bottom surface 3 is substantially parallelogrammatic. In the embodiment, an acute-angled corner of the substantially parallelogrammatic contour shape of the guide pad 1 is set to have the angle of approximately 35.0°, which is not limited thereto. The contour shapes of the top surface 2 and the bottom surface 3 are truncated at the acute-angled corners, and thus may be seen as a substantially hexagonal shape. Among the plurality of side surfaces 4, 5 and 6, the two opposing side surfaces 5, 5 extending along a longitudinal direction A are substantially formed of planes, and are arranged substantially in parallel with each other. The two side surfaces 6, 6 are also substantially formed of planes, and are arranged substantially in parallel with each other. The two side surfaces 4, 4 are also arranged substantially in parallel with each other, but the configuration thereof will be described later.

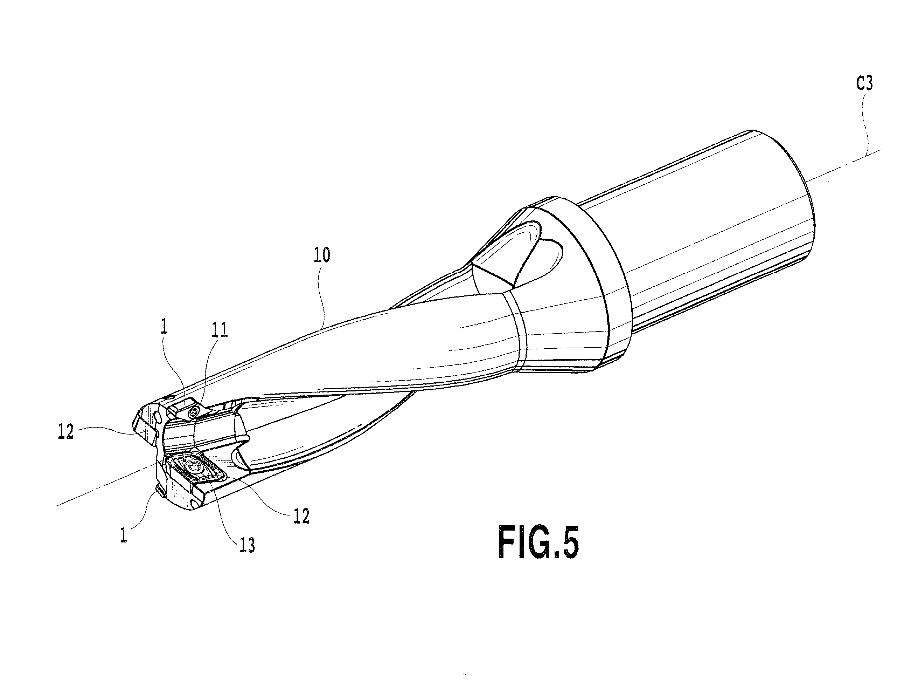

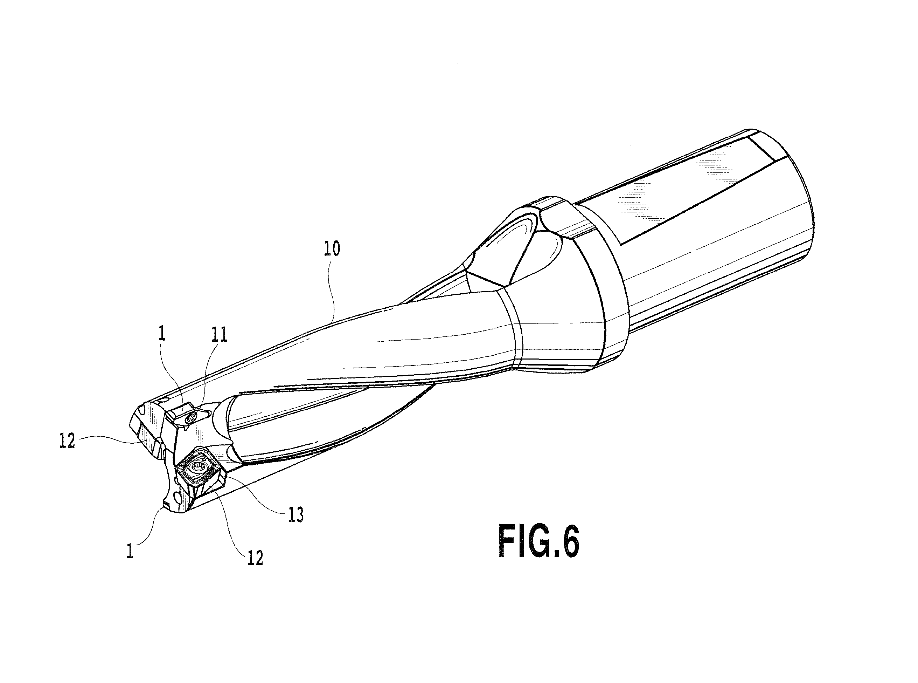

The guide pad 1 is removably attached to a tool body 10 of a rotary cutting tool (indexable drill) as shown in Figs. 5 and 6, for example. In this case, the guide pad 1 is attached so that the longitudinal direction A is in parallel with an axis of rotation C3 of the rotary cutting tool. A guide surface 4a is formed on the side surface 4. The guide surface 4a is formed as a curved surface with a curvature radius R having a substantially arc-like cross-section, and extends in the longitudinal direction A. The guide surface 4a is partially in contact with an inner wall surface of a machining hole that is machined by the drill, and serves to support the drill. This operation guides the drill to the machining hole, resulting in improved straightness of the drill. A portion of the guide surface 4a around an end 4e located at the tip side of the drill of both ends of the guide surface 4a in the longitudinal direction A is positioned so as to be in contact with the inner wall surface of the machining hole. That is, the guide pad 1 is placed while being slightly tilted so that the portion other than the area around one end 4e of the guide surface 4a is free from contact. That the guide pad 1 is removably attached to the cutting tool means easy replacement. For example, it indicates the case where the guide pad 1 is fixed with a clamp screw 11 and the like. The method of attaching the guide pad 1 is not limited to the use of the clamp screw 11, but various known attaching methods may be employed.

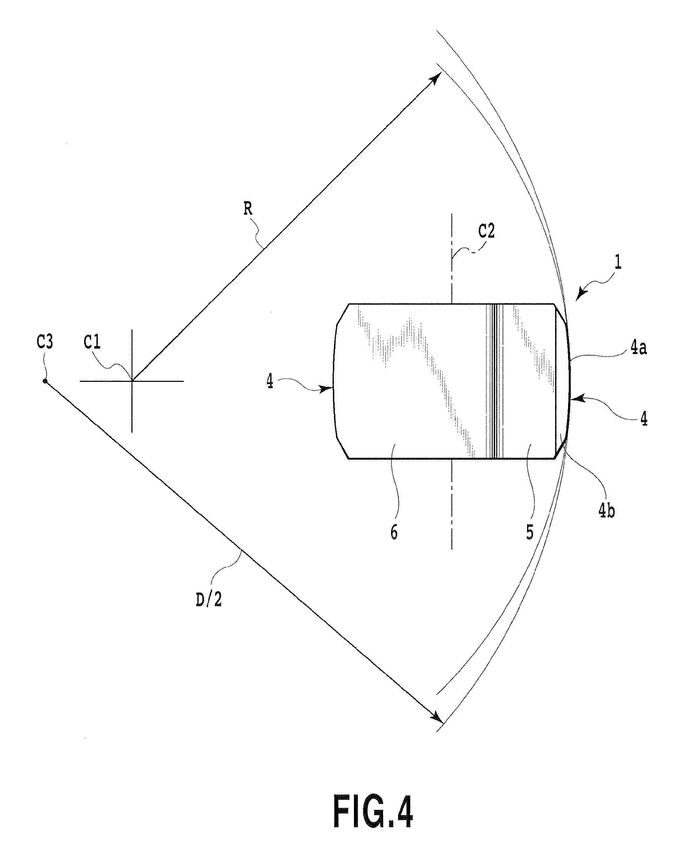

As the specific shape of the guide surface 4a, it is defined by its curvature radius R that is smaller than half of a diameter D of the guide hole as shown in Fig. 4. The guide hole denotes the hole through which the guide pad is guided in the similar way as the aforementioned machining hole. When the guide pad 1 is attached to the indexable drill with the machining hole diameter of approximately 32 mm, for example, the curvature radius R may be set to approximately R15. 0 mm. If the curvature radius R is larger than the half of the diameter D of the machining hole, the guide surface 4a does not contact the machining hole serving as the guide hole but fails to provide the guide function, and an edge of the guide surface 4a contacts the machining hole as a result. Contact of the edge of the guide surface 4a with the inner wall surface of the machining hole may damage the inner wall surface thereof.

In the embodiment, as the curvature radius R of the guide surface 4a is kept constant, the center of the curvature of the guide surface 4a is located on an axis line C1 as shown in Fig. 4. The axis line C1 is a straight line that extends in a vertical direction with respect to the drawing of Fig. 4 along the longitudinal direction A. The embodiment will be explained with respect to the case where the curvature radius R is kept constant. However, the present invention is not limited to the aforementioned case, and is also applied to, for example, such cases that the curvature radius R of the guide surface 4a varies in the longitudinal direction A, and the curvature of arc varies in accordance with the position on the arc. A part of the guide surface 4a may be formed as the plane.

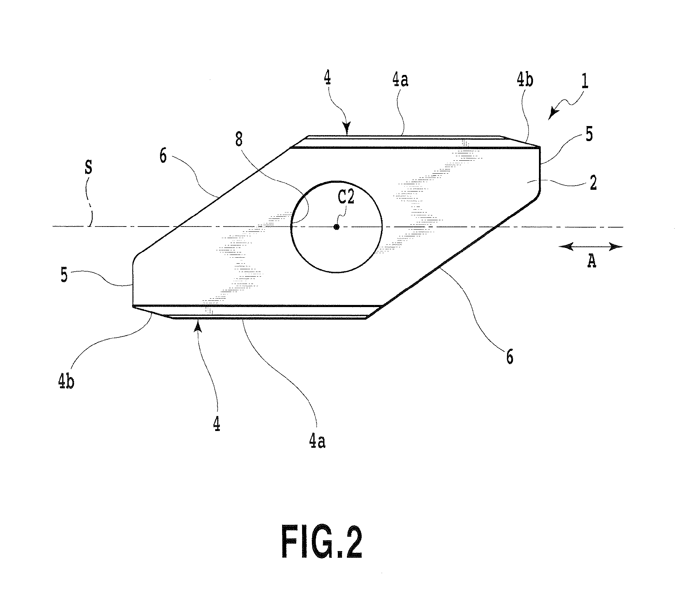

As shown in Fig. 2, the guide pad 1 has a single mounting hole 8 formed therein that penetrates the top surface 2 and the bottom surface 3. The guide pad 1 is formed 180° rotationally symmetrical with respect to a center axis line C2 of the mounting hole 8. The plane that contains the axis line C2 and passes the center between the two side surfaces 4, 4 is set as a reference plane S. As known from Fig. 2, the contour shapes of the top surface 2 and the bottom surface 3 of the guide pad 1 are formed to be asymmetrical with respect to the reference plane S. In other words, the top surface 2 and the bottom surface 3 have left-right asymmetrical contour shapes with no axis of symmetry in any direction.

A part of the side surface of the guide pad 1, which includes one of the two guide surfaces 4a serves as a seating surface upon attachment to the tool body 10. A part of the bottom surface 3 of the guide pad 1 also serves as the seating surface upon attachment to the tool body 10.

The guide pad 1 according to the present invention is entirely formed of the material of cemented carbide, cermet, or ceramic. Alternatively, a hard film may be coated on the surface of the aforementioned hard material. In other words, the steel material and brazing material do not have to be used as the material for forming the guide pad 1 according to the present invention. This makes it possible to reduce the size of the guide pad 1, thus improving the freedom degree of arrangement on the tool body 10.

Preferably, chamfer is appropriately provided around the edge of the guide surface 4a. For example, it is possible to form the guide surface 4a entirely on the side surface 4, but in this case, the edge of the guide surface 4a may damage the inner wall surface of the machining hole. The width of the guide surface 4a may be arbitrarily set within a range of the plate thickness of the guide pad 1. The width of the guide surface 4a may be made narrower than the plate thickness of the guide pad 1 by forming a stepped portion and an inclined portion on the side surface 4. The width of the guide surface 4a may vary in the longitudinal direction A. The plate thickness of the guide pad 1 is appropriately adjusted so that the head of the clamp screw 11 is reliably hidden and the fastening strength is secured. It is preferable to set the width of the guide surface 4a to be narrower than the plate thickness of the guide pad 1 in terms of avoiding the interference with the other components. If there is no concern about interference with the other components, there is a case that with the same width, it is possible to suppress the manufacturing costs without generating excessive processing costs.

Dimensions of the top surface 2 and the bottom surface 3 of the guide pad 1 may be appropriately adjusted so as not to be interfered with the other components, and to reduce the overall dimension while keeping the strength. In the embodiment, a clamp screw 13 for a cutting insert 12 is employed as the fastening part with which the cutting insert 12 is attached to the tool body 10. The guide pad 1 is designed in consideration of the interference with the clamp screw 13 for the cutting insert 12, and a prepared hole of the female screw, which are hard to recognize from the surface. The fastening part for the cutting insert 12 is not limited to the clamp screw 13, but various types of related art may be applied. In such a case, the guide pad 1 is arranged so as to avoid interference with all the parts.

On the side surface 4, a chamfer 4b is formed at a portion of the guide surface 4a near one end 4e thereof. It is intended to prevent the guide pad 1 from damaging the inner wall surface of the machining hole, and from causing abnormal damage such as chipping. The guide surface 4a is adjusted so that only the vicinity region of the chamfer 4b serves as a guide surface, and a clearance from the inner wall surface of the machining hole is secured as the distance from the vicinity region increases.

In the embodiment, the curvature radius R of the guide surface 4a is kept constant, but the invention is not limited thereto. It is possible to positively change the curvature radius R of the guide surface 4a to appropriately adjust the resultant gap between the guide surface 4a and the inner wall surface of the machining hole.

Joint portions of the respective side surfaces 4, 5 and 6 of the guide pad 1 are rounded to prevent the abnormal damage such as chipping. In the embodiment, each curvature radius of all the rounded corners at 6 points may be set to approximately R0.4 mm. The size of the roundness of approximately 0.4 mm allows easy formation, which is sufficient to prevent the abnormal damage such as chipping.

The indexable drill is the typical example as the cutting tool that allows removable attachment of the guide pad 1. Alternatively, it is effective for the cutting tool especially used for drilling work, such as the gun drill and reamer. However, it is not limited to those described above. It is applicable to many kinds of cutting tools which use the guide pad.

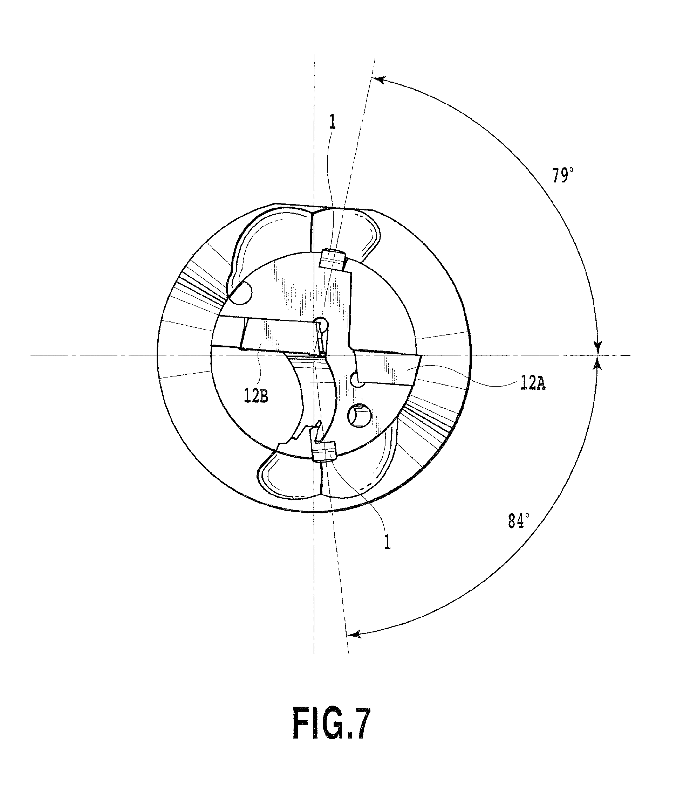

The drill to which the guide pad 1 is attached according to the embodiment is configured to have the guide surface 4a of the guide pad 1 arranged at the position as shown in Fig. 7. A position of a tip of the peripheral cutting edge is set to a reference angle 0° as the angle measurement criterion. The position of the cutting edge at the outermost circumference is set as the reference since the guide pad 1 is intended to support the drill in the radial direction. For the single cutting-edge structure, the optimal positions of the guide surfaces 4a are set to two positions, at a 180° position forward in the relative rotating direction of the tool from the cutting edge, and at a 90° position backward in the relative rotating direction of the tool from the cutting edge. Meanwhile, for the two-cutting-edge solid drill for balance cut, each position is set at a 90° position from the cutting edge, respectively.

In the embodiment, the optimal positions are set at 90° positions forward and backward from the cutting edge, respectively on the assumption of use of the two-cutting-edge drill. As a result of aiming at the 90° positions forward and backward from the cutting edge, respectively, the guide pad 1 is set at two positions of an approximately 79°forward in the relative rotating direction of the tool from the cutting edge of the peripheral cutting edge, and an approximately 84° position backward in the relative rotating direction of the tool from the cutting edge. The deviation amounts from the optimal positions are approximately 11° and 6°, respectively. If the conventional guide pads are arranged with the tool of the same type, limits of the respective deviation amounts are approximately 45° and 23°. The use of the guide pad 1 according to the present invention improves the deviation amounts by approximately 45° and 13°, respectively. The experimental results of attachment to the indexable drill for drilling of the steel material show the improvement in accuracy of the machining hole diameter by approximately 20%.

Specifically, the drill with the diameter of 50.0 mm and whole length of 370 mm was attached to a vertical machining center, and a carbon steel S45C (220HB) was used as the work material. The cutting speed Vc = 150 m/min, feed f = 0.10 mm/rev, and the depth of the machining hole of 150 mm were set as the conditions for cutting, and the fuel was supplied through the inside of the drill. The drill having the guide pad 1 according to the embodiment attached thereto, the drill having the conventional guide pad attached thereto, and the drill without the guide pad were used to machine the work materials to drill 12 holes, respectively. Each dispersion in the diameter of the machined hole was evaluated. The dispersion in the machining hole diameters by the drill having the guide pad 1 according to the embodiment attached thereto resulted in approximately 0.14 mm as the difference in the diameter of the machining hole between the portion around the inlet part and the portion at the deep part. Meanwhile, the difference generated when using the drill without the guide pad resulted in approximately 0.24 mm, and the difference generated when using the drill having the conventional guide pad attached thereto resulted in approximately 0.17 mm. The use of the drill having the guide pad according to the embodiment attached thereto improved the accuracy of the machining hole by approximately 20% at a maximum compared to the use of the drill with the conventional guide pad.

As Fig. 5 shows, the guide pad 1 according to the embodiment may be provided on the surface of a chip discharge groove of the drill. In such an arrangement, the guide pad 1 is easily attachable. Since it is arranged at the position close to the tip end of the chip discharge groove, the secondary effect may be expected which prevents the damage to the chip discharge groove and deterioration in the surface roughness irrespective of the contact with the high-temperature chip immediately discharged from the cutting edge. This allows contribution to improvement in chip discharging property by positively providing the pattern for discharging the chip (not shown).

It is preferable that the surface on which the guide pad 1 is placed is in parallel with the axis of rotation C1 of the tool. The arrangement on the surface is likely to make the guide surface 4a in parallel with the axis of rotation C1 of the tool, thus allowing the guide pad 1 to be simply shaped, and the guide pad 1 to be easily attached. However, the arrangement is not limited to the one as described above. For example, the guide pad 1 may be provided on the twisted surface so long as the guide surface 4a is shaped to be adaptable to the twisting.

The cutting tool to which the guide pad 1 is removably attached is removably mounted on the machine tool such as the machining center and lathe, receives rotating motion around the axis of rotation C1 as the center, and the relative movement with respect to the work material so that the work material such as the steel material is subjected to the cutting process. If the cutting tool is the drill, the guide pad 1 is brought into contact with the inner wall surface of the hole drilled by itself, and guided by the hole to improve the precision of working of the hole to be machined. The guide pad 1 and the cutting tool may be used in the machine tool such as the drill press.

The guide pad 1 is formed into a shape 180° rotationally symmetrical with respect to the center axis line C2 of the mounting hole 8. This is intended to allow the usage of the guide pad twice or more times by providing two or more tip portions upon attachment of the guide pad 1 to the tool body 10 of the cutting tool. In other words, after using one of the guide surfaces 4a, the guide pad 1 is rotated at 180° around the center axis line C2 so as to allow the use of the other guide surface 4a. The part that hardly affects the attachment to the tool body 10 and the guide by the guide surface 4a does not have to be formed into a shape line symmetrical with respect to the center axis line C2 of the mounting hole 8. The design may be arbitrarily changed by applying the concavo-convex portion so as not to affect the cutting performance.

### Second Embodiment

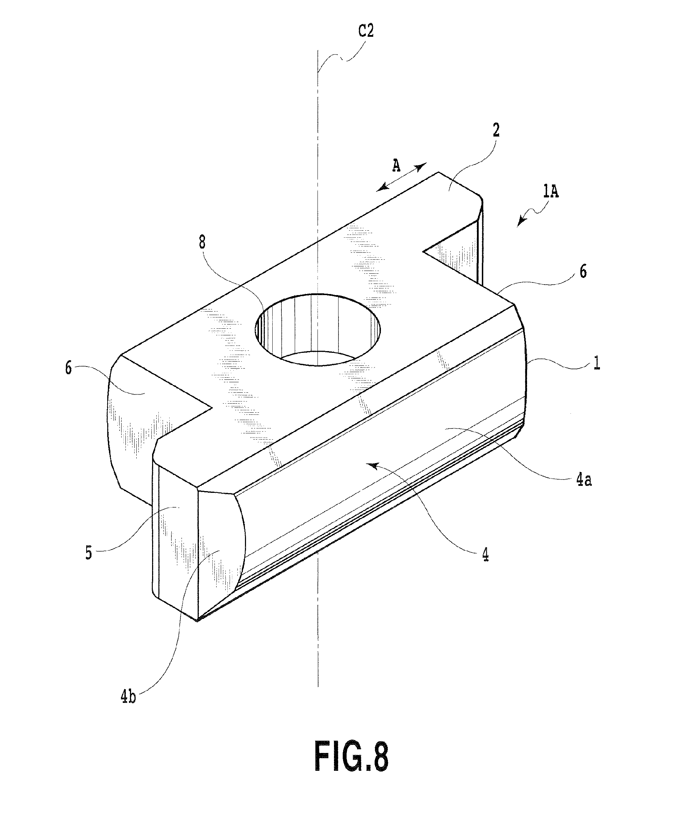

The contour shape of the guide pad according to the present invention is not limited to the substantially parallelogrammic plate shape as described in the first embodiment. The design of the contour shape of the guide pad according to the present invention may be changed appropriately by applying the concavo-convex portion to the respective sides within a range not affecting the cutting performance. The guide surface having the convex curved surface formed on the side surface of the guide pad represents the characteristic of the present invention. A guide pad 1A according to a second embodiment will be described referring to Fig. 8.

According to the first and the second embodiments as described above, two guide surfaces 4a are formed. However, the number of the guide surfaces 4a is not limited to such value. For example, if the number of usage is set to three or more times, three or more guide surfaces 4a may be provided accordingly. For example, the guide pad may have a substantially regular polygonal plate shape such as a substantially triangular plate shape and a substantially square plate shape (not shown).

The conventional guide pad manufacturing method may be directly used as the method of manufacturing the guide pad 1. For example, manufacturing is conducted through the conventional manufacturing steps using the powder-pressurizing molding process and sintering. The grinding work such as the guide surface 4a and chamfering may be added if needed. Furthermore, it may be subjected to the surface treatment such as coating of the hard material film through CVD and PVD if necessary. Various types of conventional technique may be applied to all the manufacturing steps.

The present invention is not limited to the embodiments as described above, but may allow appropriate change, addition and omission of the configuration without departing from the gist of the present invention. For example, it is also possible to provide, in the top surface, the groove corresponding to the chip discharge groove of the tool body 10 of the cutting tool and cause the groove to function as a part of the chip discharge groove while obtaining the similar effects as those of the present invention.

## Claims

1. A guide pad (1) formed in a plate-like shape, comprising:
opposite top and bottom surfaces (2,3); and
a side surface (4) extending between the top surface (2) and the bottom surface (3), the guide pad being removably attached to a tool body (10) of a cutting tool, wherein
the side surface (4) comprises at least one guide surface (4a).

2. The guide pad according to claim 1, wherein the at least one guide surface (4a) is curved convexly and extends in a longitudinal direction (A) of the guide pad.

3. The guide pad according to claim 1 or 2, wherein
the side surface (4) comprises opposite first and second side surfaces (4, 4); and
the at least one guide surface (4a) comprises first and second guide surfaces (4a,4a) formed on the first and second side surfaces (4, 4), respectively.

4. The guide pad according to any of claims 1 to 3, wherein the top and bottom surfaces (2, 3) have left-right asymmetrical contour shapes.

5. The guide pad according to claim 4, wherein the top and bottom surfaces (2,3) have contour shapes in a substantially parallelogram shape.

6. The guide pad according to claim 5, wherein the substantially parallelogram shape has a truncated acute-angled corner.

7. The guide pad according to any of claims 1 to 6, further comprising a single mounting hole (8) that penetrates the top surface and bottom surfaces (2,3), wherein the guide pad (1) is formed 180° rotationally symmetric with respect to a center axis line (C2) of the mounting hole (8).

8. The guide pad according to any of claims 1 to 7, wherein a whole of the guide pad is formed of only a material of any of cemented carbide, cermet and ceramic.

9. The guide pad according to claim 8, wherein a hard coating is coated on a surface of the material.

10. A cutting tool body comprising a pad seat that allows reception of the guide pad (1) according to any of claims 1 to 9.

11. A cutting tool comprising:
the guide pad (1) according to any of claims 1 to 9; and
a tool body (10) to which the guide pad (1) is attached.
